# EUROPEAN PATENT APPLICATION

(11) **EP 2 604 155 A1**
(43) Date of publication of application: **19.06.2013**
(21) Application number: 12195872.2
(22) Date of filing: 06.12.2012
(51) Int. Cl.: A47J 36/02, A47J 27/00

(54) **Aluminium pan having composite bottom**

(30) Priority: 16.12.2011 CN 201120528299 U
(71) Applicant: Hu, Chengshao, 321306 Zhejiang Province Zhejiang (CN)
(72) Inventor: Hu, Chengshao, 321306 Zhejiang Province Zhejiang (CN)
(74) Representative: Reboussin, Yohann Mickaël Noël

(57) **Abstract**

Disclosed herein is an aluminium pan with the composite bottom. The pan includes an aluminium pan body having a bottom, and it further includes a magnetic plate which is embedded into and connected with the bottom. An opening is formed in the magnetic plate which is constructed by a plurality of magnetic tiles integrated together. In this creation, due to the magnetic plate which is constructed of integrated plurality of magnetic tiles, the integrity is improved for the pan as well as for the production of magnetic plates, therefore the production efficiency of magnetic plates as well as the join efficiency between the bottom and the plate is substantially improved and thus increases the overall productivity of products, in the meanwhile, the opening is arranged to spare materials as well as to enable better fastened connection to the bottom compared to the manner of having the bottom fully covered by magnetic tiles.

## Description

### Field of Invention

The creation relates to pan, in particular relates to a pan having composite bottom.

### Background of Invention

To include magnetic conductivity in an aluminium pan for application with a induction cooker, an iron tile is employed to be embedded into the bottom of the aluminium pan, however, in the prior structure it is to divide a magnetic iron plate into separate tiles and have these tiles embedded into the pan bottom separately. As such, the magnetic iron plate is required to be processed into shape tile by tile, which is the same for the embedding of magnetic iron tiles into pan bottom, this manner leads to inferior magnetic iron tile productivity and low efficiency of embedding, and eventually results in undesirable overall productivity.

### Summary of the Invention

In consideration of this, the technical problem for this creation to settle is providing an aluminium pan with composite bottom. This kind of pan is able to improve productivity of magnetic plates as well as the efficiency of embedding the plates into the bottom and subsequently improve the overall productivity of products.

To have the purpose attained, the bellowing technical solution is employed by the creation:
A pan with composite bottom, the pan includes a pan body having a bottom, wherein the pan further including a magnetic plate embedded into the bottom, an opening is provided on the magnetic plate, wherein the magnetic plate is constructed by a plurality of conjoined magnetic tiles.

Preferably, the magnetic plate is monolithic or pieced together by a plurality of magnetic tiles; every set of tiles comprises at least two pieces of said magnetic tiles to form an integral structure.

Preferably, the peripheries of the magnetic plates are clad and fixed into pan bottom, the peripheries of the magnetic plates includes the outer edges of the magnetic plates as well as the edges of the opening, the center of the plates are exposed and in parallel with the bottom surface of the pan.

Preferably, the edges of the magnetic plates are arched to have warped edges; the warped edges are clad and fixed into the pan bottom.

Preferably, the warped edges are formed by all or part of the edges.

Preferably, a contacting surface is provided on the pan bottom contacting the magnetic plate to adapt the magnetic plate to be embedded into the pan bottom. Preferably, the magnetic tile is stainless iron tile, iron tile or alloyed iron tile.

Preferably, the opening includes an opening centre disposed at the centre of the magnetic plate and an outer notch in the outer edge of the magnetic plate and concaved toward the opening centre.

Preferably, there are at least two outer notches which are evenly spaced on the magnetic plate.

Preferably, the magnetic plate is shaped in fan in general.

Accordingly, the beneficial effects of the creation are:
In view of prior art, due to the integrating of a plurality of magnetic tiles to form the magnetic plate, the integrity of this creation as well as for the magnetic plate production is improved, therefore the production efficiency of magnetic plates as well as the connect efficiency between the bottom and the plate is substantially improved and thus increases the overall productivity of products, in the meanwhile, the opening is arranged to spare materials as well as enable better fastened connection to the bottom compared to the manner of having the bottom fully covered by magnetic tiles.

Within this creation, there can be a plurality of openings to further reduce the cost, power consumption and resources. A warped edge is provided in the outer edges of the magnetic plate and in the edges of the opening of the magnetic plate, wherein the bottom of the warped edge is clad by the aluminium material of the pan bottom, the warped edge will stab into the pan bottom, and the aluminium will wrap the warped edge automatically when pressure is applied onto it, as the warped edge is formed by arching the edge of the magnetic plate, the magnetic plate and the warped edge is securely bonded. A contacting surface on the pan bottom corresponding to the top surface of the magnetic plate is provided to enable close contact between the magnetic plate and the pan bottom and thus, improve thermal conductivity. The magnetic tile is from the group of stainless iron tile, iron tile, and alloyed iron tile, magnetic plate in combination of the aluminium material of the pan bottom is able to form various patterns or, the shape of themselves can form exquisite patterns. In this creation, the magnetic plate is preferably fan-shaped in general and the opening preferably includes a central opening and several outer notches, the more outer notches it has incorporated the less thermal expansion difference between the magnetic plate and the aluminium pan bottom and more reliable magnetic fixation will be achieved.

### Description of the Drawings

Fig 1 shows a structure diagram of the monolithic magnetic plate in a first embodiment in accordance to the creation.
Fig 2 shows a structure diagram of the magnetic plate shown in Fig 1.
Fig 3 shows a structure diagram of a magnetic plate formed of a plurality of magnetic tiles pieced together.
Fig 4 shows a structure diagram of the magnetic plate shown in Fig 3.
Fig 5 shows a structure diagram of a set of magnetic tiles.
Fig 6 shows a separated structure of the magnetic plate and the pan bottom in accordance to the creation.
Fig 7 shows a first partial and cross-sectional view of the bonding of the magnetic plate and the pan bottom before they are bonded, wherein the stamping positioning is illustrated.
Fig 8 shows a second partial and cross-sectional view of the bonding of the magnetic plate and the pan bottom after they are bonded.

### Description of the Invention

In order to help people skilled in the art better understand the features and technical content of this creation, reference can be made to the following detailed description and drawings of the creation.

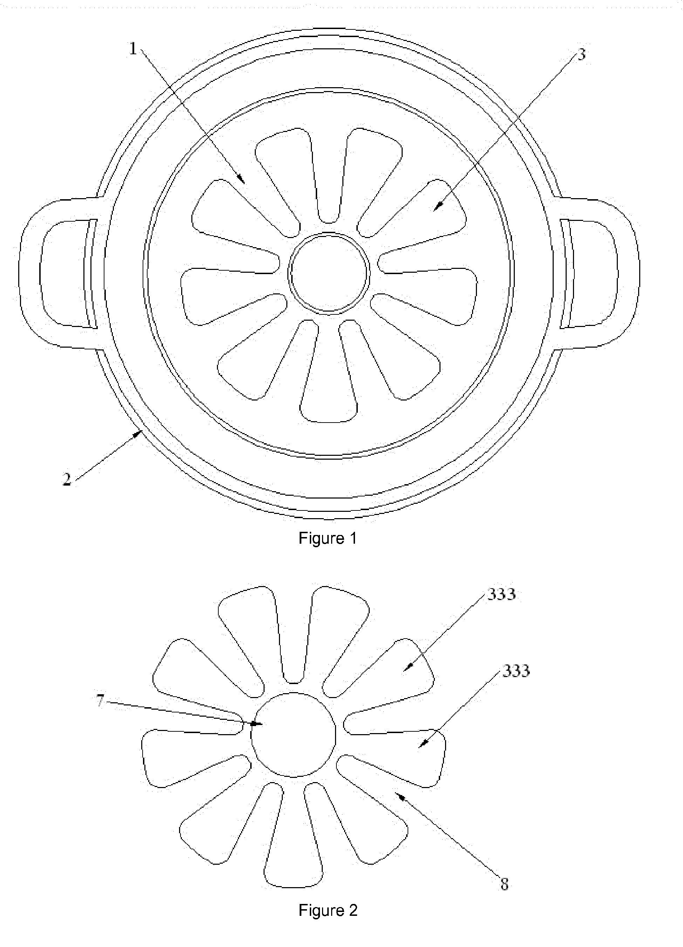

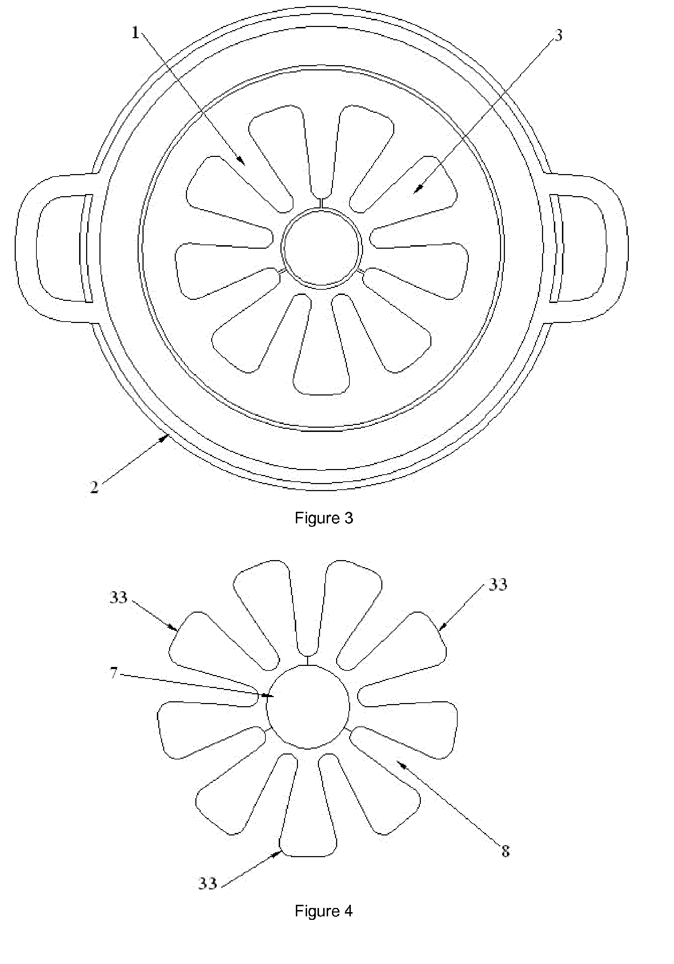

Reference can now be made to Fig 1 to Fig 8, provided by this creation is a composite bottomed aluminium pan including a pan bottom 1 and a pan body 2, wherein the pan further including a magnetic plate 3 embedded into the bottom, an opening is formed in the magnetic plate constructed by a plurality of magnetic tiles 333 pieced together, the magnetic plate is monolithic or pieced together by a plurality of magnetic tiles, every set of tiles comprises at least two pieces of said magnetic tiles to form an integral structure. The peripheries of the magnetic plates are clad and fixed into pan bottom, the peripheries of the magnetic plates includes the outer edges of the magnetic plates as well as the edges of the opening, the centre 11 of the plates are exposed and in parallel with the bottom surface of the pan. The edges of the magnetic plates are arched to have warped edges 4, the warped edges are clad and fixed into the pan bottom. The warped edges are formed by all or part of the edges, a contacting surface 6 is provided on the pan bottom contacting the magnetic plate top surface 5 to adapt the magnetic plate to be embedded into the pan bottom. The magnetic tile is stainless iron tile, iron tile or alloyed iron tile. The opening includes an opening centre 7 disposed at the centre of the magnetic plate and an outer notch 8 in the outer edge of the magnetic plate, there are at least two outer notches which are evenly spaced on the magnetic plate, the magnetic plate is shaped in fan in general.

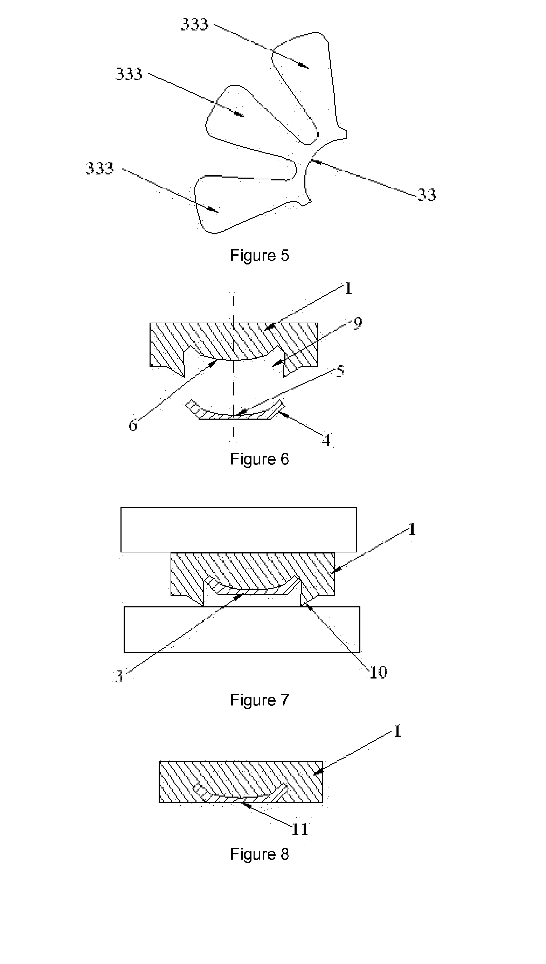

In the creation, as shown in Fig 6, Fig 7, Fig 8, a method for manufacturing an aluminium pan with composite bottom is provided, including: fabricating a magnetic plate; fabricating a aluminium pan body, wherein a groove is formed for the placement of the magnetic plate, and stamping the magnetic plate in the groove of the pan bottom through a stamping machine to fix the magnetic plate into the pan bottom.

In this creation, while fabricating the magnetic plate, the edge of the magnetic plate is arched into a warped edge. The warped edge will stab into the pan bottom, and the aluminium will wrap the warped edge automatically when pressure is applied onto it, as the warped edge is form by arching the edge of the magnetic plate, the magnetic plate and the warped edge is securely bonded. When fabricating the aluminium pan body, a bulge 10 out of the pan bottom must be formed around the groove on the pan bottom, when the magnetic plate is to be fixed, the bulge around the groove will be pressed onto the bottom surface of the warped edge of the magnetic plate, the bulge around the groove will easily clad and fix the edge of the magnetic plate by a stamping machine, while fabricating the aluminium pan body, on the surface of the groove, a contacting surface should be formed to adapt the magnetic plate, which will allow the magnetic plate a close contact with the groove surface to prevent the magnetic plate from distortion in the centre while under pressure.

It must be understood that what is disclosed here is preferable embodiments of the creation rather than restricting it, all equivalent structural modification and alteration implementing the content of the description and drawings of the creation shall be deemed as fallen into the scope of this creation.

## Claims

1. A composite bottomed aluminium pan, including an aluminium pan body having a pan bottom, wherein further including a magnetic plate embedded into the pan bottom, wherein an opening is formed in the magnetic plate constructed by a plurality of conjoined magnetic tiles.

2. The composite bottomed aluminium pan in claim 1, wherein the magnetic plate is monolithic or pieced together by a plurality of magnetic tiles, every set of tiles comprises at least two pieces of said magnetic tiles to form an integral structure,

3. The composite bottomed aluminium pan in claim 2, wherein the peripheries of the magnetic plates are clad and fixed into pan bottom, the peripheries of the magnetic plates includes the outer edges of the magnetic plates as well as the edges of the opening, the center of the plates are exposed and in parallel with the bottom surface of the pan.

4. The composite bottomed aluminium pan in claim 3, wherein the edges of the magnetic plates are arched to have warped edges, the warped edges are clad and fixed into the pan bottom.

5. The composite bottomed aluminium pan in claim 4, wherein the warped edges are formed by all or part of the edges.

6. The composite bottomed aluminium pan in claim 5, wherein a contacting surface is provided on the pan bottom contacting the magnetic plate to adapt the magnetic plate to be embedded into the pan bottom.

7. The composite bottomed aluminium pan in claim 6, wherein the magnetic tile is stainless iron tile, iron tile or alloyed iron tile.

8. The composite bottomed aluminium pan in any of claim 1 to claim 7, wherein the opening includes an opening centre disposed at the centre of the magnetic plate and a outer notch in the outer edge of the magnetic plate and concaved toward the opening centre.

9. The composite bottomed aluminium pan in claim 8, wherein at least two outer notches are provided, which are evenly spaced on the magnetic plate.

10. The composite bottomed aluminium pan in claim 9, wherein the magnetic plate is fan-shaped in general.
